# EUROPÄISCHE PATENTSCHRIFT

(11) **EP 3 924 416 B1**
(45) Veröffentlichungstag und Bekanntmachung des Hinweises auf die Patenterteilung: **04.01.2023**
(21) Anmeldenummer: 20702438.1
(22) Anmeldetag: 27.01.2020
(51) Int. Cl.: C08L 1/04, H01B 1/12

(54) **VERFAHREN ZUR HERSTELLUNG VEREINZELTER CELLULOSE-NANOKRISTALLE SOWIE CELLULOSE-NANOKRISTALLE UND DEREN VERWENDUNG**
METHOD FOR PRODUCING INDIVIDUAL CELLULOSE NANOCRISTALS, THE CELLULOSE NANOCRISTALS, AND USE THEREOF
PROCÉDÉ DE PRODUCTION DE NANOCRISTAUX DE CELLULOSE INDIVIDUELS, NANOCRISTAUX DE CELLULOSE ET UTILISATION DE CEUX-CI

(30) Priorität: 14.02.2019 DE 102019103717
(43) Veröffentlichungstag der Anmeldung: 22.12.2021
(73) Patentinhaber: Fraunhofer-Gesellschaft zur Förderung der angewandten Forschung e.V., 80686 München (DE)
(72) Erfinder: ABUSHAMMALA, Hatem, 38106 Braunschweig (DE)
(74) Vertreter: Gramm, Lins & Partner Patent- und Rechtsanwälte PartGmbB
(86) Internationale Anmeldenummer: PCT/EP2020/051880
(87) Internationale Veröffentlichungsnummer: WO 2020/164893

(56) Entgegenhaltungen:
- WO-A1-2014/201562
- HATEM ABUSHAMMALA: "A Simple Method for the Quantification of Free Isocyanates on the Surface of Cellulose Nanocrystals upon Carbamation using Toluene Diisocyanate", SURFACES, Bd. 2, Nr. 2, 13. Juni 2019 (2019-06-13), Seiten 444-454, XP055683184, DOI: 10.3390/surfaces2020032

## Beschreibung

Die Erfindung betrifft ein Verfahren zur Herstellung vereinzelter Cellulose-Nanokristalle mit einer elektrisch leitenden Beschichtung, Cellulose-Nanokristalle mit einer individuellen, elektrisch leitenden Beschichtung als solche sowie die Verwendung von Cellulose-Nanokristallen mit einer elektrisch leitenden Beschichtung.

Die zunehmende Verwendung elektrischer und elektronischer Komponenten führt zu Problemen bei der Entsorgung der entsprechenden Erzeugnisse oder Komponenten. Der sogenannte E-Schrott hat einen großen Anteil an dem Resourcenverbrauch, die da die Menge an elektronischen Bauteilen aufgrund der sich verkürzenden Modell- und Produktzyklen ständig zunimmt und sich nachteilig auf die Umwelt und/oder das Klima auswirkt. Insbesondere der schnelle Durchlauf von technologischen Produkten und die Verwendung der biologisch nicht abbaubaren, auf fossilen Kohlenwasserstoffen basierten Art der Komponenten führen zu einem negativen Einfluss. Darüber hinaus können negative Umwelteinflüsse aufgrund der Herstellungsverfahren der elektronischen Bauteile oder deren Komponenten sowie aufgrund des Recyclings dieser Bauteile und Komponenten auftreten.

Cellulose-Nanokristalle als solche, beispielsweise in der Verwendung als Aerogels, Hydrogels oder Organogels, sind bereits aus dem Stand der Technik bekannt. Die WO 2011/030170 A1 beschreibt Cellulose-Nanokristalle und deren Herstellungsverfahren sowie deren Verwendung. Der Vorteil von Cellulose besteht darin, dass es ein biologisch abbaubares Produkt ist, das weltweit leicht verfügbar und nachwachsend ist. Geschätzt werden 100 Milliarden Tonnen Cellulose jedes Jahr weltweit produziert.

Die US 2016/0148715 A1 beschreibt eine Zusammensetzung aus einem Cellulose-Nanokristall als Kern und einem leitfähigen Polymer.

Cellulose-Nanokristalle selbst können leicht aus Zellstoff hergestellt werden und haben eine stabartige Struktur. Cellulose-Nanokristalle weisen eine vorteilhafte mechanische Steifigkeit und Festigkeit auf, stellen eine große Oberfläche zur Verfügung und sind biologisch abbaubar. Sie können sich vielfachen Oberflächenmodifikationen unterziehen und können sich selbst zu sehr interessanten, flüssig-kristallinen Strukturen zusammenfinden. Cellulose-Nanokristalle an sich sind nicht elektrisch leitfähig und wurden bislang nur zu einem Trägermaterial zusammenfasst, um ein flexibles Papier mit einer elektrisch leitfähigen Beschichtung aus Polymeren, wie Polyanilin herzustellen.

Aufgabe der vorliegenden Erfindung ist es, ein Verfahren und einen Werkstoff bereitzustellen, der biologisch abbaubar und vielseitig für elektrische und elektronische Komponenten einsetzbar ist.

Erfindungsgemäß wird diese Aufgabe durch ein Verfahren mit den Merkmalen des Hauptanspruches, Cellulose-Nanokristalle mit den Merkmalen des nebengeordneten Anspruchs sowie durch deren Verwendung gelöst. Vorteilhafte Ausgestaltungen und Weiterbildungen der Erfindung sind in den Unteransprüchen, der Beschreibung sowie den Figuren offenbart.

Das Verfahren zur Herstellung vereinzelter Cellulose-Nanokristalle mit einer elektrisch leitenden Beschichtung sieht das Umsetzen von nicht oxydierten Glukoseeinheiten der Cellulose mit einer Isocyanat-Gruppe aufweisenden Aryl- oder Heteroaryl-Verbindung unter Ausbildung einer Carbamat-Bindung zwischen mindestens einem der C2-, C3- und C6-Atome der Glukoseeinheit und der Aryl- oder Heteroaryl-Verbindung vor. Anschließend werden benachbarte, über die Carbamat-Gruppe an die Glukoseeinheiten der Cellulose gebundene Aryl- oder Heteroaryl-Verbindungen derart polymerisiert, dass eine elektrisch leitende Struktur dieser Aryl- oder Heteroaryl-Gruppen enthaltenen Verbindungen ausgebildet wird. Dadurch ist es möglich, vereinzelte Nanokristalle mit einer individuellen, elektrisch leitenden Beschichtung zu versehen und diese individuell elektrisch leitenden Cellulose-Nanokristalle zu Produkten zu formen oder zu Teilen von Produkten zu machten. Es werden also zunächst Cellulose-Nanokristalle bereitgestellt, die mit zumindest einer Hydroxylgruppe an der Oberfläche der Cellulose-Nanokristalle mit einer von zwei Isocyanat-Gruppen eines Toluoldiisocyanates verbunden werden. Die jeweils andere Isocyanatgruppe des Toluoldiisocyanates wird in eine andere Amingruppe hydrolysiert, anschließend wird die Amingruppe mit einem Benzenring eines benachbarten Toluoldiisocyanates polymerisiert.

Die Aryl- oder Heteroaryl-Verbindung kann eine Phenyl-Gruppe, Pyrrol-Gruppe, Naphtalin-Gruppe, Antrhacen-Gruppe und/oder Phenanthren-Gruppe aufweisen, gegebenenfalls können auch andere Gruppen Teil der Aryl- oder Heteroaryl-Verbindung sein.

Die Aryl- oder Heteroaryl-Verbindung, die eine Isocyanat-Gruppe aufweist, kann insbesondere eine Diisocyanat-Gruppe aufweisen oder mehrere Diisocyanat-Gruppen aufweisen. Sofern die Aryl- oder Heteroaryl-Verbindung eine oder mehrere Diisocyanat-Gruppen aufweist, erfolgt eine Hydrolyse der zweiten Isocyanat-Gruppe nach Umsetzung und Ausbildung der Carbamat-Bindung.

Die Polymerisation kann eine Radikal-Polymerisation sein, die elektrisch leitende Beschichtung kann eine Polyanilin-ähnliche, intrinsisch elektrisch leitende Beschichtung sein.

Das Umsetzen der nicht oxidierten Glukoseeinheiten der Cellulose mit einer Isocyanat-Gruppe aufweisenden Aryl- oder Heteroaryl-Verbindung erfolgt bevorzugt unter Ausbildung der Carbamat-Bindung zwischen dem C6-Atom der Glukoseeinheit und der Aryl- oder Heteroaryl-Verbindung.

Die Umsetzung der Isocyanat-Gruppe aufweisenden Aryl- oder Heteroaryl-Verbindung mit der Glukose in Toluol, Aceton, Dimethylsulfoxid, Tetrahydrofuran, Chlormethan oder Pyridine mit einem tertiären Amin (TEA), zum Beispiel mit Trimethylamin, erfolgen.

Die Cellulose-Nanokristalle werden bevorzugt stabförmig ausgebildet und weisen eine Länge zwischen50nm und 500 nm und/oder eine Breite oder einen Durchmesser zwischen 3 nm und 20 nm auf.

Die Erfindung betrifft ebenfalls vereinzelte Cellulose-Nanokristalle mit einer individuellen, elektrisch leitenden Beschichtung, insbesondere erhältlich nach einem wie oben beschriebenen Verfahren.

Zumindest einige der Cellulose-Moleküle, aus denen ein Cellulose-Nanokristall gebildet ist, sind mit einer der Isocyanat-Gruppen verbunden, die bevorzugt aus dem Toluoldiisocyanat stammen. Die Hydroxylgruppe des Cellulosemoleküls ist mit einer der beiden Isocyanat-Gruppen eines Toluoldiisocyanates verbunden, wobei die andere Isocyanat-Gruppe des Toluoldiisocyanates bevorzugt zu einer Amingruppe hydrolysiert ist. Cellulose-Moleküle und Iso-Gruppen werden zu einem Cellulose-Nanokristall polymerisiert, wobei die Amingruppe zu einer elektrisch leitenden Beschichtung polymerisiert ist, um ein individuell leitenden Nanokristall auf Basis von Cellulose auszubilden.

Bevorzugt werden Cellulose-Nanokristalle mit einer elektrisch leitenden Beschichtung als biologisch abbaubare, elektrisch leitende Komponenten in elektrischen oder elektronischen Bauteilen eingesetzt. Alternativ oder ergänzend können sie als Aerogel, als gedruckte elektrische oder elektronische Schaltungen, als additiv hergestellte 3D-Strukturen, als Sensoren, als Kondensatoren, als elektrische Sicherung, als Batterie, als elektrisch leitenden Suspensionen oder Dispersionen, als Oberflächenbeschichtungen, als Papier, als Spule und/oder als Nanokabel ausgebildet sein.

Mit dem oben beschriebenen Verfahren ist es möglich, Anilin-Monomere auf der Oberfläche von Cellulose-Nanokristallen anzuordnen und anschließend eine Polymerisation durchzuführen. Als Ergebnis wird das daraus hergestellte Cellulose-Nanokristall individuell leitend und kann individuell als sogenanntes Nano-Kabel wirken, die einfach zu orientieren, abzuseihen und anzuordnen sind. Durch diese Merkmale können die Einsatzgebiete und Anwendungen vervielfacht werden. Sowohl in Form von Suspensionen oder Dispersionen und Nanopapieren können Cellulose-Nanokristalle zum Herstellen von gedruckten Schalterplatten oder leitenden 3D-Strukturen, thermischen Sensoren und dergleichen eingesetzt werden.

Nachfolgend wird die Erfindung anhand der Figuren näher erläutert. Es zeigen:
- Figur 1 -: eine Darstellung eines Gemisches von Cellulose-Nanokristallen und Polyanilin gemäß dem Stand der Technik;
- Figur 2 -: eine Darstellung eines erfindungsgemäßen Cellulose-Nanokristalles; sowie
- Figur 3 -: eine schematische Darstellung des Herstellverfahrens.

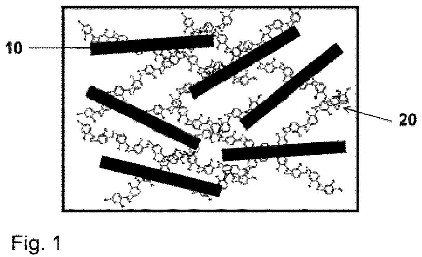

Figur 1 zeigt eine herkömmliche leitende Mischung von Cellulose-Nanokristallen 10 innerhalb einer Matrix eines leitenden Polymers 20, beispielsweise Polyanilin. Die Cellulose-Nanokristalle 10 sind dabei nicht eigenständig leitend, sondern bilden Strukturmaterial aus, um eine ausreichende Festigkeit oder andere mechanische Eigenschaften bereitzustellen.

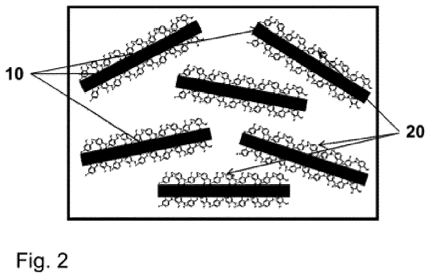

Figur 2 zeigt erfindungsgemäße Cellulose-Nanokristalle 10, die individuell mit einer leitenden Beschichtung 20 versehen sind. Die Beschichtung 20 besteht dabei nicht aus Polyanilin, sondern nutzt eine Reaktion mit Toluoldiisocyanat, um eine individuelle Beschichtung herzustellen.

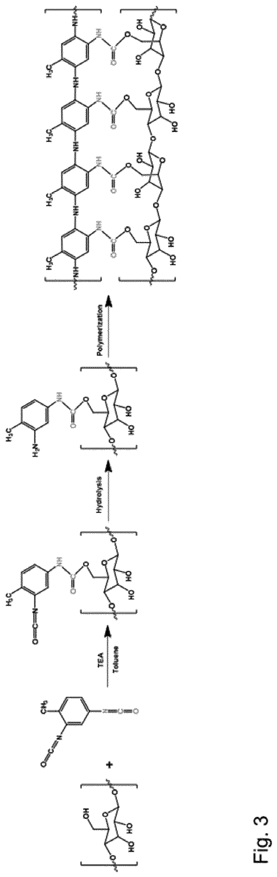

Das Verfahren ist in der Figur 3 schematisch erläutert. Zunächst werden Cellulose-Nanokristalle bereitgestellt, und eine Hydroxylgruppe der Oberfläche der Cellulose-Nanokristalle 10 wird mit einer der beiden Isocyanat-Gruppen des Toluoldiisocyanates reagiert. Anschließend findet eine Hydrolyse der anderen Isocyanat-Gruppe in eine Amingruppe statt. Danach wird die Polymerisation der Amingruppe mit einem Benzenring eines benachbarten Toluoldiisocyanates durchgeführt, sodass am Ende eine elektrisch leitende Beschichtung des Cellulose-Nanokristalls vorliegt. Die elektrisch leitende Beschichtung ist ähnlich einer Polyanilin-Beschichtung intrinsisch leitfähig, ohne Polyanilin selbst zu verwenden.

## Patentansprüche

1. Verfahren zur Herstellung vereinzelter Cellulose-Nanokristalle mit einer elektrisch leitenden Beschichtung, umfassend die Schritte:
- Umsetzen von nicht oxidierten Glukoseeinheiten der Cellulose mit einer Isocyanat-Gruppe aufweisenden Aryl- oder Heteroaryl-Verbindung unter Ausbildung einer Carbamat-Bindung zwischen mindestens einem der C2-, C3- und C6-Atome der Glukoseeinheit und der Aryl- oder Heteroaryl-Verbindung;
- Polymerisieren benachbarter über die Carbamat-Gruppe an die Glukoseeinheiten der Cellulose gebundener Aryl- oder Heteroaryl-Verbindungen derart, dass eine elektrisch leitende Struktur dieser Aryl- oder Heteroaryl-Gruppen enthaltenen Verbindungen ausgebildet wird.

2. Verfahren zur Herstellung vereinzelter Cellulose-Nanokristalle mit elektrisch leitender Beschichtung nach Anspruch 1, wobei die Aryl- oder Heteroaryl-Verbindung eine Phenyl-Gruppe, Pyrrol-Gruppe, Naphtalin-Gruppe, Antrhacen-Gruppe und/oder Phenanthren-Gruppe aufweist.

3. Verfahren zur Herstellung vereinzelter Cellulose-Nanokristalle mit elektrisch leitender Beschichtung nach Anspruch 1, wobei die Isocyanat-Gruppe aufweisende Aryl- oder Heteroaryl-Verbindung eine ist, die Diisocyanat-Gruppen aufweist.

4. Verfahren zur Herstellung vereinzelter Cellulose-Nanokristalle mit elektrisch leitender Beschichtung nach Anspruch 3, umfassend den Schritt der Hydrolyse der zweiten Isocyanat-Gruppe nach Umsetzung und Ausbildung der Carbamat-Bindung.

5. Verfahren zur Herstellung vereinzelter Cellulose-Nanokristalle mit elektrisch leitender Beschichtung nach einem der Ansprüche 1 bis 4, wobei die Polymerisation eine radikalische Polymerisation ist.

6. Verfahren zur Herstellung vereinzelter Cellulose-Nanokristalle mit elektrisch leitender Beschichtung nach einem der Ansprüche 1 bis 5, wobei die elektrisch leitende Beschichtung eine Polyanilin-ähnliche Beschichtung ist.

7. Verfahren zur Herstellung vereinzelter Cellulose-Nanokristalle mit elektrisch leitender Beschichtung nach einem der Ansprüche 1 bis 6, wobei das Umsetzen von nicht an einem C6-Atom oxidierten Glukoseeinheiten der Cellulose mit einer Isocyanat-Gruppe aufweisenden Aryl- oder Heteroaryl-Verbindung unter Ausbildung einer Carbamat-Bindung zwischen dem C6-Atom der Glukoseeinheit und der Aryl- oder Heteroaryl-Verbindung erfolgt.

8. Verfahren zur Herstellung vereinzelter Cellulose-Nanokristalle mit elektrisch leitender Beschichtung nach einem der Ansprüche 1 bis 7, wobei die Umsetzung der Isocyanat-Gruppe aufweisenden Aryl- oder Heteroaryl-Verbindung mit der Glukose in Toluol, Aceton, Dimethylsulfoxid, Tetrahydrofuran, Chlormethan oder Pyridine mit einem tertiären Amin (TEA) erfolgt.

9. Vereinzelte Cellulose-Nanokristalle mit elektrisch leitender Beschichtung aus polymerisierten, benachbarten, über Carbamat-Gruppen an die Glukoseeinheiten der Cellulose gebundenen Aryl- oder Heteroaryl-Verbindungen, wobei diese Cellulose-Nanokristalle stabförmig ausgebildet sind und eine Länge zwischen 50 nm und 500 nm und/oder eine Breite oder einen Durchmesser zwischen 3 nm und 20 nm aufweisen.

10. Vereinzelte Cellulose-Nanokristalle mit elektrisch leitender Beschichtung aus polymerisierten, benachbarten, über Carbamat-Gruppen an die Glukoseeinheiten der Cellulose gebundenen Aryl- oder Heteroaryl-Verbindungen erhältlich mit einem Verfahren nach einem der Ansprüche 1 bis 8.

11. Cellulose-Nanokristalle nach Anspruch 10, wobei diese Cellulose-Nanokristalle stabförmig ausgebildet sind und eine Länge zwischen 50 nm und 500 nm und/oder eine Breite oder einen Durchmesser zwischen 3 nm und 20 nm aufweisen.

12. Verwendung von Cellulose-Nanokristallen mit einer elektrisch leitenden Beschichtung aus polymerisierten, benachbarten, über Carbamat-Gruppen an die Glukoseeinheiten der Cellulose gebundenen Aryl- oder Heteroaryl-Verbindungen nach einem der Ansprüche 9 bis 11 oder hergestellt nach dem Verfahren nach einem der Ansprüche 1 bis 7, als biologisch abbaubare elektrisch leitende Komponente, als Aerogel, als gedruckte elektrische oder elektronische Schaltung, als additiv hergestellte 3D-Struktur, als Sensor, als Kondensator, als elektrische Sicherung, als Batterie, als elektrisch leitende Dispersion, als Oberflächenbeschichtung, als Papier, als Spule und/oder Nanokabel.

## Claims

1. A process for producing individual cellulose nanocrystals having an electrically conductive coating, comprising the steps of:
- reacting nonoxidized glucose units of cellulose with an isocyanate-comprising aryl or heteroaryl compound to form a carbamate bond between at least one of the C2-, C3- and C6-atoms of the glucose unit and the aryl or heteroaryl compound;
- polymerizing adjacent aryl or heteroaryl compounds bonded to the glucose units of the cellulose via the carbamate group such that an electrically conductive structure of these aryl- or heteroaryl-containing compounds is formed.

2. The process for producing individual cellulose nanocrystals having an electrically conductive coating as claimed in claim 1, wherein the aryl or heteroaryl compound comprises a phenyl group, pyrrole group, naphthalene group, anthracene group and/or phenanthrene group.

3. The process for producing individual cellulose nanocrystals having an electrically conductive coating as claimed in claim 1, wherein the isocyanate-comprising aryl or heteroaryl compound is one comprising diisocyanate groups.

4. The process for producing individual cellulose nanocrystals having an electrically conductive coating as claimed in claim 3, comprising the step of hydrolyzing the second isocyanate group after reaction and formation of the carbamate bond.

5. The process for producing individual cellulose nanocrystals having an electrically conductive coating as claimed in any of claims 1 to 4, wherein the polymerization is a freeradical polymerization.

6. The process for producing individual cellulose nanocrystals having an electrically conductive coating as claimed in any of claims 1 to 5, wherein the electrically conductive coating is a polyaniline-like coating.

7. The process for producing individual cellulose nanocrystals having an electrically conductive coating as claimed in any of claims 1 to 6, wherein the reacting of glucose units of the cellulose not oxidized at a C6-atom with an isocyanate-comprising aryl or heteroaryl compound affords a carbamate bond between the C6-atom of the glucose unit and the aryl or heteroaryl compound.

8. The process for producing individual cellulose nanocrystals having an electrically conductive coating as claimed in any of claims 1 to 7, wherein the reacting of the isocyanate-comprising aryl or heteroaryl compound with the glucose is carried out in toluene, acetone, dimethyl sulfoxide, tetrahydrofuran, chloromethane or pyridine with a tertiary amine (TEA).

9. An individual cellulose nanocrystal having an electrically conductive coating of polymerized adjacent aryl or heteroaryl compounds bonded to the glucose units of the cellulose via carbamate groups, wherein said cellulose nanocrystal is rod-shaped and has a length between 50 nm and 500 nm and/or a width or a diameter between 3 nm and 20 nm.

10. The individual cellulose nanocrystal with electrically conductive coating of polymerized adjacent aryl or heteroaryl compounds bonded to the glucose units of the cellulose via carbamate groups, obtainable by a process as claimed in any of claims 1 to 8.

11. The cellulose nanocrystal as claimed in claim 10, wherein said cellulose nanocrystal is rod-shaped and has a length between 50 nm and 500 nm and/or a width or a diameter between 3 nm and 20 nm.

12. The use of cellulose nanocrystals having an electrically conductive coating of polymerized adjacent aryl or heteroaryl compounds bonded to the glucose units of the cellulose via carbamate groups as claimed in any of claims 9 to 11 or produced by the process as claimed in any of claims 1 to 7 as a biodegradable electrically conductive component, as an aerogel, as a printed electrical or electronic circuit, as an additively produced 3D structure, as a sensor, as a capacitor, as an electrical fuse, as a battery, as an electrically conductive dispersion, as a surface coating, as paper, as a coil and/or a nanocable.

## Revendications

1. Procédé de préparation de nanocristaux de cellulose individuels avec un revêtement électriquement conducteur, comprenant les étapes consistant à :
- faire réagir des unités de glucose non oxydées de la cellulose avec un composé aryle ou hétéroaryle présentant un groupe isocyanate, en formant une liaison carbamate entre au moins l'un des atomes en C2, C3 et C6 de l'unité de glucose et le composé aryle ou hétéroaryle ;
- polymériser des composés aryle ou hétéroaryle adjacents liés aux unités de glucose de la cellulose par le groupe carbamate, de manière à former une structure électriquement conductrice de ces composés contenant des groupes aryle ou hétéroaryle.

2. Procédé de préparation de nanocristaux de cellulose individuels avec un revêtement électriquement conducteur selon la revendication 1,
dans lequel le composé aryle ou hétéroaryle présente un groupe phényle, un groupe pyrrole, un groupe naphtalène, un groupe anthracène et/ou un groupe phénanthrène.

3. Procédé de préparation de nanocristaux de cellulose individuels avec un revêtement électriquement conducteur selon la revendication 1,
dans lequel le composé aryle ou hétéroaryle présentant un groupe isocyanate est un composé qui présente des groupes diisocyanate.

4. Procédé de préparation de nanocristaux de cellulose individuels avec un revêtement électriquement conducteur selon la revendication 3, comprenant l'étape d'hydrolyse du deuxième groupe isocyanate après réaction et formation de la liaison carbamate.

5. Procédé de préparation de nanocristaux de cellulose individuels avec un revêtement électriquement conducteur selon l'une des revendications 1 à 4, dans lequel la polymérisation est une polymérisation radicalaire.

6. Procédé de préparation de nanocristaux de cellulose individuels avec un revêtement électriquement conducteur selon l'une des revendications 1 à 5, dans lequel le revêtement électriquement conducteur est un revêtement de type polyaniline.

7. Procédé de préparation de nanocristaux de cellulose individuels avec un revêtement électriquement conducteur selon l'une des revendications 1 à 6, dans lequel la réaction d'unités de glucose de la cellulose non oxydées sur un atome en C6 avec un composé aryle ou hétéroaryle présentant un groupe isocyanate s'effectue en formant une liaison carbamate entre l'atome en C6 de l'unité de glucose et le composé aryle ou hétéroaryle.

8. Procédé de préparation de nanocristaux de cellulose individuels avec un revêtement électriquement conducteur selon l'une des revendications 1 à 7, dans lequel la réaction du composé aryle ou hétéroaryle présentant un groupe isocyanate avec le glucose s'effectue dans le toluène, l'acétone, le diméthylsulfoxyde, le tétrahydrofurane, le chlorométhane ou la pyridine avec une amine tertiaire (TEA).

9. Nanocristaux de cellulose individuels avec un revêtement électriquement conducteur, basés sur des composés aryle ou hétéroaryle polymérisés adjacents liés aux unités de glucose de la cellulose par des groupes carbamate,
dans lesquels ces nanocristaux de cellulose sont réalisés en forme de bâtonnets et présentent une longueur comprise entre 50 nm et 500 nm et/ou une largeur ou un diamètre compris entre 3 nm et 20 nm.

10. Nanocristaux de cellulose individuels avec un revêtement électriquement conducteur, basés sur des composés aryle ou hétéroaryle polymérisés adjacents liés aux unités de glucose de la cellulose par des groupes carbamate, pouvant être obtenus par un procédé selon l'une des revendications 1 à 8.

11. Nanocristaux de cellulose selon la revendication 10,
dans lesquels ces nanocristaux de cellulose sont réalisés en forme de bâtonnets et présentent une longueur comprise entre 50 nm et 500 nm et/ou une largeur ou un diamètre compris entre 3 nm et 20 nm.

12. Utilisation de nanocristaux de cellulose avec un revêtement électriquement conducteur avec un revêtement électriquement conducteur, basés sur des composés aryle ou hétéroaryle polymérisés adjacents liés aux unités de glucose de la cellulose par des groupes carbamate, selon l'une des revendications 9 à 11, ou préparés par le procédé selon l'une des revendications 1 à 7, à titre de composant électriquement conducteur biodégradable, d'aérogel, de circuit électrique ou électronique imprimé, de structure 3D réalisée par fabrication additive, de capteur, de condensateur, de fusible électrique, de batterie, de dispersion électriquement conductrice, de revêtement de surface, de papier, de bobine et/ou de nano-câble.
